# EUROPEAN PATENT APPLICATION

(11) **EP 4 826 593 A1**
(43) Date of publication of application: **21.10.2026**
(21) Application number: 25170619.8
(22) Date of filing: 15.04.2025
(51) Int. Cl.: G06K 19/07

(54) **VOLTAGE LIMITER AND METHOD OF IMPLEMENTING THE SAME**

(71) Applicant: NXP B.V., 5656 AG Eindhoven (NL)
(72) Inventor: Zoescher, Lukas, 5656AG Eindhoven (NL); Malinowski, Slawomir Rafal, 5656AG Eindhoven (NL)
(74) Representative: Krott, Michel

(57) **Abstract**

In accordance with a first aspect of the present disclosure, there is provided a voltage limiter for use in a radio frequency identification (RFID) tag, the voltage limiter comprising: a first voltage line coupled to an output of a rectifier of the RFID tag, wherein the voltage limiter is configured to receive an output voltage of the rectifier on said first voltage line; a first shunting element comprising an input and an output, wherein the output of the first shunting element is coupled to ground; a second shunting element comprising an input and an output, wherein the input of the second shunting element is coupled to the first voltage line and the output of the second shunting element is coupled to the input of the first shunting element; a series regulating element comprising a first input, a second input and an output, wherein the first input of the series regulating element is coupled to the first voltage line and the output of the series regulating element is coupled to a supply voltage node of one or more circuits of the RFID tag; and a second voltage line coupled to the output of the second shunting element and to the second input of the series regulating element.

## Description

### TECHNICAL FIELD

The present disclosure relates to a voltage limiter. Furthermore, the present disclosure relates to a corresponding method of implementing a voltage limiter.

### BACKGROUND

The backscatter power level of a radio frequency identification (RFID) transponder - often referred to as an "RFID tag" - is an important parameter for achieving a robust communication between said transponder and a reader device. Accordingly, the performance of RFID tags is often evaluated in terms of this backscatter power level. Furthermore, requirements may be in place which specify a minimum limit for said backscatter power level. However, it may be difficult to ensure that an RFID tag meets these requirements.

### SUMMARY

In accordance with a first aspect of the present disclosure, there is provided a voltage limiter for use in a radio frequency identification (RFID) tag, the voltage limiter comprising: a first voltage line coupled to an output of a rectifier of the RFID tag, wherein the voltage limiter is configured to receive an output voltage of the rectifier on said first voltage line; a first shunting element comprising an input and an output, wherein the output of the first shunting element is coupled to ground; a second shunting element comprising an input and an output, wherein the input of the second shunting element is coupled to the first voltage line and the output of the second shunting element is coupled to the input of the first shunting element; a series regulating element comprising a first input, a second input and an output, wherein the first input of the series regulating element is coupled to the first voltage line and the output of the series regulating element is coupled to a supply voltage node of one or more circuits of the RFID tag; and a second voltage line coupled to the output of the second shunting element and to the second input of the series regulating element.

In one or more embodiments, the voltage limiter further comprises a biasing element coupled between the first voltage line and the second voltage line, wherein said biasing element is configured to provide a bias current to the second voltage line.

In one or more embodiments, the biasing element is implemented as a current mirror, current source, or as a resistor.

In one or more embodiments, the second shunting element, the series regulating element and/or the biasing element are configured to be bypassed when the RFID tag operates in a predefined mode.

In one or more embodiments, the bias current is designed to be larger than an intrinsic bias current of the first shunting element.

In one or more embodiments, the first shunting element and the second shunting element are implemented as diodes.

In one or more embodiments, the second shunting element is implemented as a p-n junction diode or as a metal-oxide-semiconductor (MOS) transistor configured as a diode.

In one or more embodiments, the series regulating element is implemented as an N-channel metal-oxide-semiconductor (NMOS) transistor.

In one or more embodiments, the voltage limiter further comprises one or more supply buffer capacitances coupled to the first voltage line, the second voltage line and/or the supply voltage node.

In one or more embodiments, an RFID tag comprises a voltage limiter of the kind set forth.

In accordance with a second aspect of the present disclosure, there is conceived a method of implementing a voltage limiter for use in a radio frequency identification (RFID) tag, the method comprising: providing the voltage limiter with a first voltage line coupled to an output of a rectifier of the RFID tag, wherein the voltage limiter is configured to receive an output voltage of the rectifier on said first voltage line; providing the voltage limiter with a first shunting element comprising an input and an output, wherein the output of the first shunting element is coupled to ground; providing the voltage limiter with a second shunting element comprising an input and an output, wherein the input of the second shunting element is coupled to the first voltage line and the output of the second shunting element is coupled to the input of the first shunting element; providing the voltage limiter with a series regulating element comprising a first input, a second input and an output, wherein the first input of the series regulating element is coupled to the first voltage line and the output of the series regulating element is coupled to a supply voltage node of one or more circuits of the RFID tag; and providing the voltage limiter with a second voltage line coupled to the output of the second shunting element and to the second input of the series regulating element.

In one or more embodiments, the method further comprises providing the voltage limiter with a biasing element coupled between the first voltage line and the second voltage line, wherein said biasing element is configured to provide a bias current to the second voltage line.

In one or more embodiments, the method further comprises implementing the biasing element as a current mirror, current source, or as a resistor.

In one or more embodiments, the second shunting element, the series regulating element and/or the biasing element are configured to be bypassed when the RFID tag operates in a predefined mode.

In one or more embodiments, the method further comprises implementing the first shunting element and the second shunting element as diodes.

### DESCRIPTION OF DRAWINGS

Embodiments will be described in more detail with reference to the appended drawings.
Fig. 1 shows the normalized input resistance of an RFID tag integrated circuit (IC) versus normalized power on tag forward (POTF).
Fig. 2 shows normalized power on tag reverse (POTR) versus normalized POTF.
Fig. 3 shows an example of a radio frequency identification (RFID) front-end of an RFID tag IC.
Fig. 4 shows an example of a voltage limitation realization in an RFID front-end.
Fig. 5 shows an illustrative embodiment of a voltage limitation realization in an RFID front-end.
Fig. 6 shows an illustrative embodiment of a method of implementing a voltage limiter for use in an RFID tag.
Fig. 7 shows another illustrative embodiment of a voltage limitation realization in an RFID front-end.
Fig. 8 shows different voltages within a voltage limiter versus an RF charge pump output current.

### DESCRIPTION OF EMBODIMENTS

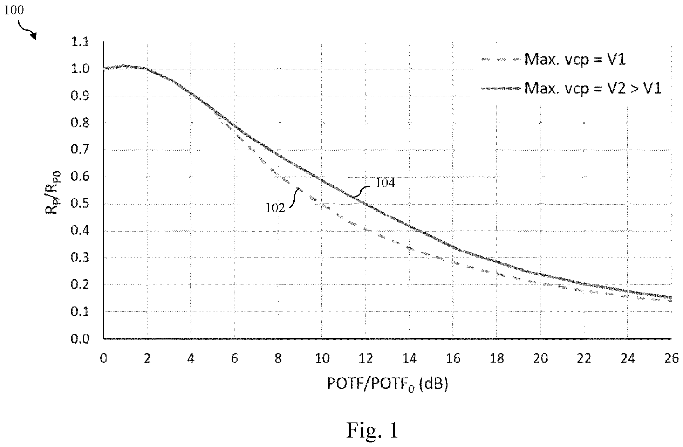

**Fig. 1** shows an input resistance of an RFID tag integrated circuit (IC) versus power on tag forward (POTF) 100. In particular, the backscatter power level of an ultrahigh frequency (UHF) RFID tag may be referred to as the power on tag reverse (POTR). This parameter has a large impact on the communication robustness between the RFID tag and a reader device. The performance of an RFID tag is therefore often evaluated in terms of POTR, and certain requirements may be in place which specify a minimum limit for POTR at a specific level of POTF. Fig. 1 shows that an equivalent parallel input resistance (R_{P}) of a UHF RFID tag IC strongly decreases with a rising receive power level corresponding to POTF, above a minimum required operating power level POTF₀ of the tag. More specifically, Fig. 1 shows the normalized R_{P} versus normalized POTF. It can be seen that an increased maximum voltage *vcp* (i.e., an increased maximum voltage output of a charge pump of the RFID tag) equal to V2 > V1 results in a raised R_{P} at elevated levels of POTF.

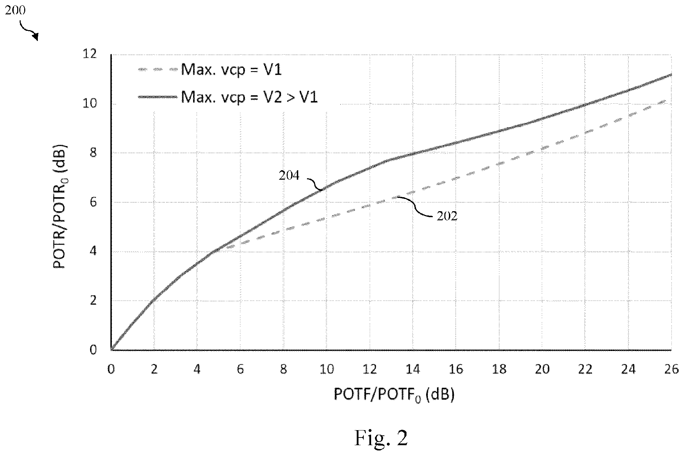

**Fig. 2** shows normalized power on tag reverse (POTR) versus POTF 200. As illustrated by curve 202, POTR degrades in relation to the POTF as a result of the change in R_{P} with rising POTF. The reduction in R_{P} of the RFID tag IC is caused at the one hand by the non-linear behavior of the rectifier - more specifically of the RF charge pump - which provides the internal power supply of the RFID tag IC from a received reader signal, and on the other hand by the required limitation of internal supply voltage levels to prevent overvoltage conditions at circuit elements of the RFID tag IC. As shown by curve 204, raising the max. charge pump output voltage *vcp* enables an increase of POTR at elevated levels of POTF. Nevertheless, increasing the maximum charge pump output voltage to enhance the backscatter power level of an RFID tag IC, while maintaining the internal supply voltage of the RFID tag IC within a safe operating area at elevated receive power levels, may be difficult.

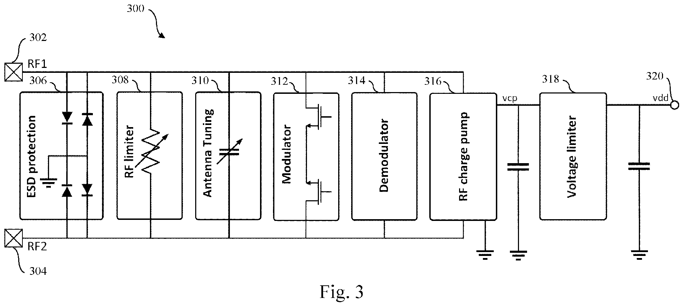

**Fig. 3** shows an example of an RFID front-end 300 of an RFID tag IC. The RFID front-end 300 comprises a first antenna terminal 302, a second antenna terminal 304, an electrostatic discharge (ESD) protection block 306, a radio frequency (RF) limiter 308, an antenna tuning block 310, a modulator 312, a demodulator 314, an RF charge pump 316, a voltage limiter 318, and a supply voltage node 320 of RFID tag circuits (i.e., of one or more functional circuits of the RFID tag IC). The RF charge pump 316 is configured to rectify and transform the RF voltage received from an antenna through the antenna terminals 302, 304, and provides a direct current (DC) supply voltage for the core circuits (not shown) of the chip (i.e., the tag IC), for example for a digital part of the tag IC and for a non-volatile memory. The modulator 312 is configured to modulate the input impedance in order to modulate the signal that is scattered back from the antenna to transmit information to an external RFID reader (not shown). Furthermore, the demodulator 314 is configured to demodulate an amplitude-modulated signal transmitted by said reader. The antenna tuning block 310 is configured to tune the chip input capacitance to maximize the power transfer from the antenna to the chip input. The ESD protection block 306 is typically implemented by anti-parallel pn-junction diodes. The RF limiter 308 is configured to limit the RF voltage amplitude at the antenna terminals 302, 304, at high received power levels on the connected antenna. Furthermore, the voltage limiter 318 is configured to limit the output voltage of the RF charge pump (i.e., voltage *vcp*) to prevent a degradation or a damage of the connected core circuits due to overvoltage. Although the voltage limiter 318 effectively protects the connected core circuits, it may also cause that the backscatter power level is insufficient.

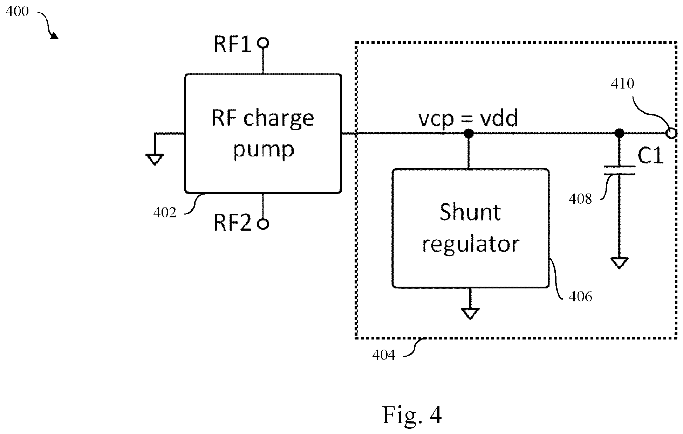

**Fig. 4** shows an example of a voltage limitation realization 400 in an RFID front-end. In this typical realization, a voltage limiter 404 comprises a shunt regulator 406 configured to limit the output voltage *vcp,* i.e., the output voltage of the RF charge pump 402. In most cases, the output voltage *vcp* corresponds to the supply voltage *vdd* of core circuitry of tag ICs at supply voltage node 410. The supply voltage *vdd* should be kept below the maximum voltage rating of the used circuit elements to prevent damage and avert circuit reliability risks. Further series regulators (not shown) may be present to provide additional regulated supply voltages lower than voltage *vdd* for specific circuit parts such as the digital part of a tag IC. Furthermore, a supply buffer capacitance 408 connected to the voltage line on which voltage *vcp* is present temporarily provides a power supply to the core circuits of the tag IC during short periods in which the signal received at RF1 and RF2 drops to a low level. For example, this may occur during modulation pauses in communication cycles between the tag and a reader device. As mentioned above, although the voltage limiter 404 effectively protects the connected core circuits, it may also cause that the backscatter power level is insufficient.

Now discussed are a voltage limiter for use in an RFID tag, and a corresponding method of implementing a voltage limiter, which facilitate increasing the backscatter power level of an RFID tag, while maintaining the internal supply voltage of the RFID tag within a safe operating area at elevated receive power levels.

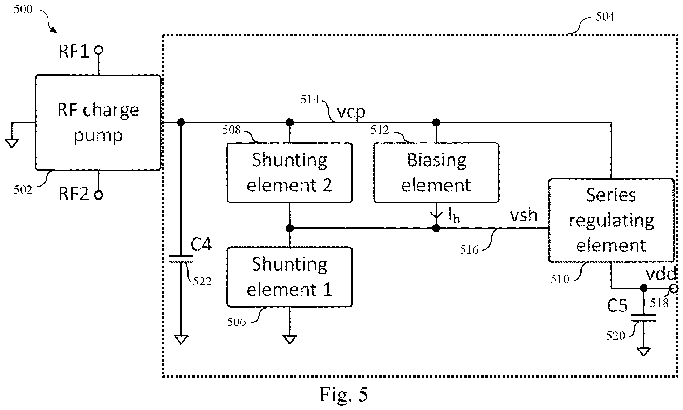

**Fig. 5** shows an illustrative embodiment of a voltage limitation realization 500 in an RFID front-end. The voltage limitation realization 500 comprises the presently disclosed voltage limiter 504, which is coupled to an output of a rectifier, more specifically an RF charge pump 502. In particular, the voltage limiter 504 comprises a first voltage line 514 coupled to the output of the charge pump 502, wherein the voltage limiter 504 is configured to receive an output voltage of the charge pump 502 on said first voltage line 514. Furthermore, the voltage limiter 504 comprises a first shunting element 506 comprising an input and an output, wherein the output of the first shunting element 506 is coupled to ground. Furthermore, the voltage limiter 504 comprises a second shunting element 508 comprising an input and an output, wherein the input of the second shunting element 508 is coupled to the first voltage line 514 and the output of the second shunting element 508 is coupled to the input of the first shunting element 506. Furthermore, the voltage limiter 504 comprises a series regulating element 510 comprising a first input, a second input and an output, wherein the first input of the series regulating element 510 is coupled to the first voltage line 514 and the output of the series regulating element 510 is coupled to a supply voltage node 518 of one or more circuits (not shown) of the RFID tag. Thus, the series regulating element 510 is a regulating element that is coupled in series between the RF charge pump 502 and the supply voltage node 518. Furthermore, the voltage limiter 504 comprises a second voltage line 516 coupled to the output of the second shunting element 508 and to the second input of the series regulating element 510. Furthermore, the voltage limiter 504 comprises a biasing element 512 coupled between the first voltage line 514 and the second voltage line 516, wherein said biasing element 512 is configured to provide a bias current to the second voltage line 516. By adding the second shunting element 508 and series regulating element 510, the backscatter power level of the RFID tag may be increased, while maintaining the internal supply voltage of the RFID tag within a safe operating area at elevated receive power levels. In particular, the backscatter power level of the RFID tag may be increased due to the raised maximum output voltage of the internal rectifier of the tag IC (i.e., of the charge pump 502) as a result of the second shunting element 508. Concurrently, the series regulating element 510 maintains the internal supply voltage at supply voltage node 518 within a safe operating area by limiting the maximum occurring voltage at this node. It is noted that the biasing element 512 is an optional element of the voltage limiter 504. For example, the RFID tag IC may sense the receive power level and only turn on the second shunting element 508 and/or the series regulating element 510 depending on the power level. The optional biasing element 512 facilitates ensuring that the voltage at the second voltage line 516 and thus the voltage at supply voltage node 518 are substantially equal to the voltage at the first voltage line 514 at low receive power levels. Therefore, the second shunting element 508 and the series regulating element 510 advantageously do not increase internal power consumption and do not negatively impact the performance of the RFID tag IC at low receive power levels.

In one or more embodiments, the biasing element 512 is implemented as a current mirror, current source, or as a resistor. In this way, a practical implementation of the biasing element 512 is realized, having a relatively low complexity and a low layout area cost. In one or more embodiments, the second shunting element 508, the series regulating element 510 and/or the biasing element 512 are configured to be bypassed when the RFID tag operates in a predefined mode. In this way, the RFID tag IC may be configured in a flexible manner, such that the second shunting element 508, the series regulating element 510 and the biasing element 512 may be active or inactive, for example, during a transmit, receive or power-up phase of the RFID tag IC. Furthermore, in one or more embodiments, the first shunting element 506 and the second shunting element 508 are implemented as diodes. In this way, a practical implementation of the first shunting element 506 and the second shunting element 508 is realized, having a relatively low complexity and a low layout area cost. Furthermore, in one or more embodiments, the second shunting element 508 is implemented as a p-n junction diode or as a metal-oxide-semiconductor (MOS) transistor configured as a diode. In this way, a practical implementation of the second shunting element 508 is realized, having a relatively low complexity and a low layout area cost. Furthermore, in one or more embodiments, the series regulating element 510 is implemented as an N-channel metal-oxide-semiconductor (NMOS) transistor. In this way, a practical implementation of the series regulating element 510 is realized, having a relatively low complexity and a low layout area cost. In one or more embodiments, the voltage limiter 504 further comprises one or more supply buffer capacitances 520, 522 coupled to the first voltage line 514, the second voltage line 516 and/or the supply voltage node 518. In this way, power may be supplied temporarily to the core circuits of the RFID tag, in case the amplitude of the received signal drops below a threshold during operations, for example, during the reception of an amplitude-modulated signal from an RFID reader or during backscatter-modulation by the RFID tag IC to transmit data to an RFID reader. The first shunting element 506, the second shunting element 508, the biasing element 512 and/or the series regulating element 510 may share associated sub-circuits such as a reference voltage generation or reference current generation circuit, for example.

More specifically, the voltage limiter 504 shown in Fig. 5 may operate as follows. The first shunting element 506 limits the voltage at node *vsh* (i.e., on the second voltage line 516) at a rising current level injected to node *vsh* to a defined value by conducting current from *vsh* to ground. The second shunting element 508, which is connected between the RF charge pump output *vcp* (i.e., the first voltage line 514) and *vsh* limits the voltage between *vcp* and *vsh,* or alternatively *vcp* and ground, at a rising RF charge pump output current by conducting current from *vcp* to *vsh* or *vcp* to ground. It is noted that the first shunting element 506 and the second shunting element 508 may be implemented by basic devices such as diodes, or alternatively as more complex circuits comprising multiple devices. The biasing element 512 provides a bias current *Ib* to node *vsh.* The level of *Ib* may be proportional to the differential voltage between *vcp* and *vsh.* Furthermore, the bias current *Ib* may approach a predefined constant value as the voltage between *vcp* and *vsh* exceeds a predefined threshold voltage. It is noted that the biasing element 512 may be implemented by a basic device such as a resistor, or alternatively as a more complex circuit comprising multiple devices. The bias current *Ib* is designed to be larger than an intrinsic bias current of the first shunting element 506 to ensure that the voltage at node *vsh* approaches the voltage at node *vcp* at low receive power levels corresponding to low levels of RF charge pump output current and voltage. The voltage between *vcp* and *vsh* increases rapidly at rising RF charge pump output current as a consequence of the limited bias current *Ib* until the second shunting element becomes active limiting the voltage between *vcp* and *vsh.* The series regulating element 510, which is connected between *vcp* and *vdd,* receives the voltage at *vsh* as a reference voltage. The series regulating element 510 regulates the voltage at node *vdd* with reference to *vsh* by adjusting a series impedance between nodes *vcp* and *vdd.* It is noted that the series regulating element 510 may be implemented by a basic device such as an NMOS transistor, or alternatively as a more complex circuit comprising multiple devices. The second shunting element 508, the biasing element 512 and/or the series regulating element 510 may be configured in a bypass state in certain modes of an RFID tag IC, for example by closing of switch elements connected between *vcp* and *vsh, vcp* and *vdd,* and/or *vsh* and *vdd.* For example, *vcp* and *vsh* as well as *vcp* and *vdd* may be connected via switches during the power-up phase of an RFID tag IC, in a test mode of an RFID tag IC, or in response to a command that is received by an RFID tag IC. The bypass state of the second shunting element 508, the biasing element 512, and/or the series regulating element 510 may be disabled in certain modes of an RFID tag IC such as a transmit mode to transmit data to an RFID reader. Furthermore, the bypass state may be controlled depending on a receive power level or more precisely a voltage or current signal proportional to a receive power level of an RFID tag IC.

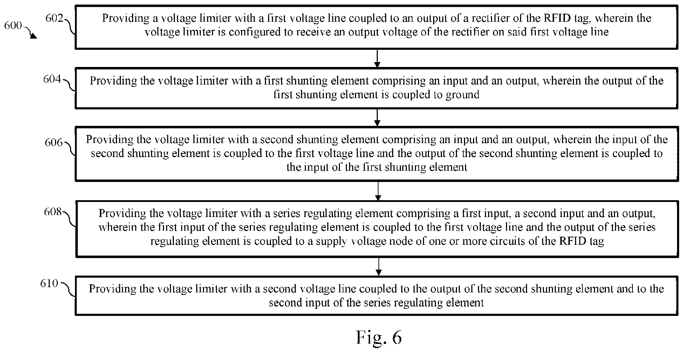

**Fig. 6** shows an illustrative embodiment of a method 600 for producing a voltage limiter for use in an RFID tag. The method 600 comprises the following steps. At step 602, the voltage limiter is provided with a first voltage line coupled to an output of a charge pump of the RFID tag, wherein the voltage limiter is configured to receive an output voltage of the charge pump on said first voltage line. At step 604, the voltage limiter is provided with a first shunting element comprising an input and an output, wherein the output of the first shunting element is coupled to ground. Furthermore, at step 606, the voltage limiter is provided with a second shunting element comprising an input and an output, wherein the input of the second shunting element is coupled to the first voltage line and the output of the second shunting element is coupled to the input of the first shunting element. Furthermore, at step 608, the voltage limiter is provided with a series regulating element comprising a first input, a second input and an output, wherein the first input of the series regulating element is coupled to the first voltage line and the output of the series regulating element is coupled to a supply voltage node of one or more circuits of the RFID tag. Furthermore, at step 610, the voltage limiter is provided with a second voltage line coupled to the output of the second shunting element and to the second input of the series regulating element. As mentioned above with reference to the corresponding voltage limiter shown in Fig. 5, by adding the second shunting element and series regulating element, the backscatter power level of the RFID tag may be increased, while maintaining the internal supply voltage of the RFID tag within a safe operating area at elevated receive power levels.

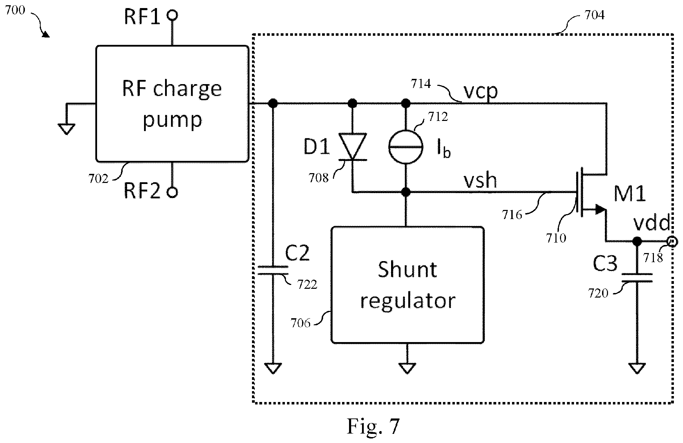

Fig. 7 shows another illustrative embodiment of a voltage limitation realization 700 in an RFID front-end. The voltage limitation realization 700 comprises a voltage limiter 704 of the kind set forth, which is coupled to an output of an RF charge pump 702. The voltage limiter 704 comprises a first shunting element implemented as a shunt regulator 706, and a second shunting element implemented as a diode 708. In particular, the diode 708 is connected in series to the shunt regulator 706 between the RF charge pump output *vcp* (i.e., the first voltage line 714) and ground. The shunt regulator 706 limits the voltage at node *vsh* (i.e., the second voltage line 716) to a predefined value *vsh*ₘₐₓ*.* A bias current 712 is provided between *vcp* and *vsh,* bypassing the diode 708. Furthermore, a transistor 710 - more specifically an NMOS device - is connected between *vcp* and the internal supply rail *vdd* (i.e., the supply voltage node 718) of the RFID tag IC. It is noted that the gate of the transistor 710 is connected to *vsh.* The transistor 710 therefore operates as a series regulating element limiting the maximum voltage at *vdd* to *vsh*ₘₐₓ minus the gate-source voltage of the transistor 710 V_{GS, M1}. The bias current 712 may be implemented in a practical circuit, for example, by a PMOS current mirror receiving a reference bias current or by a resistor. Alternatively, a depletion-mode NMOS device showing a very low or negative threshold voltage Vₜₕ or a depletion-mode PMOS device exhibiting a Vₜₕ that is close to zero or positive Vₜₕ may be used to provide the bias current 712. In typical CMOS technologies used for RFID tag ICs so-called native or zero-Vₜₕ devices are available that have the above-described characteristics. The diode 708 may be implemented in a practical circuit by a pn-junction diode or a MOS-transistor configured as a diode. In some embodiments, the diode 708 may be realized functionally by a more complex circuit comprising multiple circuit elements. The series regulating transistor 710 may be implemented in a practical circuit by a native or zero-Vₜₕ device. In this case the maximum voltage at *vdd* corresponding to *vdd*ₘₐₓ is roughly equal to *vsh*ₘₐₓ, considering that *vdd*ₘₐₓ = *vsh*ₘₐₓ *-* V_{GS, M1}. It is noted that V_{GS, M1} may be in a range of a few +/-10mV, for example. Furthermore, the voltage limiter 704 comprises optional supply buffer capacitances 720, 722 connected to nodes *vcp* and *vdd.* The voltage limiter 704 may comprise an additional supply buffer capacitance (not shown) connected to node *vsh.*

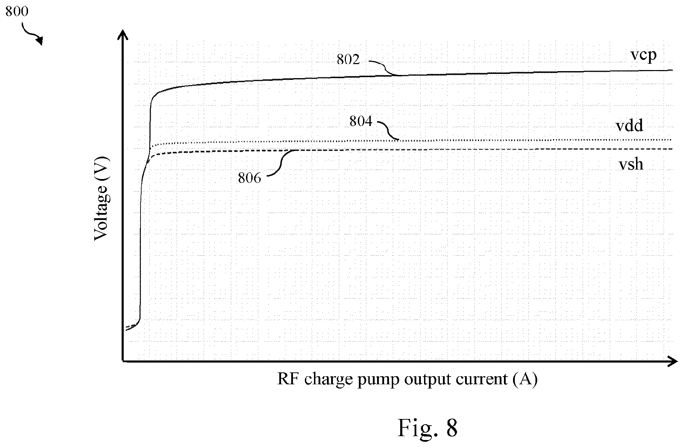

**Fig. 8** shows different voltages 800 within a voltage limiter versus an RF charge pump output current. In particular, Fig. 8 illustrates how the voltage 806 at node *vsh,* the voltage 802 at node *vcp,* and the voltage 804 at node *vdd* of the voltage limiter shown in Fig. 7 behave as a function of the RF charge pump output current. It can be seen that the voltage 802 at node *vcp* increases steeply as the output current exceeds a load current *idd* at node *vdd* and possibly an intrinsic bias current of the shunt regulator. The voltage 806 at node *vsh* and the voltage 804 at node *vdd* closely follow *vcp* in this operating region. As the current rises further, the voltage 806 at node *vsh* approaches a constant level *vsh*ₘₐₓ as defined by the shunt regulator. The voltage 804 at node *vdd* follows *vsh* and settles to a constant level *vdd*ₘₐₓ that is defined by *vsh*ₘₐₓ and the series regulating element (i.e., transistor 710 in Fig. 7). The voltage 802 at node *vcp* increases further as the RF charge pump current exceeds the bias current level *Ib* plus *idd.* In this embodiment, the bias current *Ib* is designed to be larger than a possibly present intrinsic bias current of the shunt regulator. The characteristics of *vcp* flatten eventually when the increasing RF charge pump output current approaches a maximum level of *vcp*ₘₐₓ that is defined by the second shunting element (i.e., the diode 708 in Fig. 7).

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE NUMBERS

- 100: normalized input resistance versus normalized power on tag forward (POTF)
- 102: maximum voltage output by charge pump (*vcp*) at a first level
- 104: maximum *vcp* at a second level
- 200: normalized power on tag reverse (POTR) versus normalized power on tag forward (POTF)
- 202: maximum *vcp* at the first level
- 204: maximum *vcp* at the second level
- 300: radio frequency identification (RFID) front-end
- 302: first antenna terminal
- 304: second antenna terminal
- 306: electrostatic discharge (ESD) protection
- 308: radio frequency (RF) limiter
- 310: antenna tuning
- 312: modulator
- 314: demodulator
- 316: RF charge pump
- 318: voltage limiter
- 320: supply voltage node of RFID tag circuits
- 400: voltage limitation realization in an RFID front-end
- 402: RF charge pump
- 404: voltage limiter
- 406: shunt regulator
- 408: supply buffer capacitance
- 410: supply voltage node of RFID tag circuits
- 500: voltage limitation realization in an RFID front-end
- 502: RF charge pump
- 504: voltage limiter
- 506: first shunting element
- 508: second shunting element
- 510: series regulating element
- 512: biasing element
- 514: first voltage line
- 516: second voltage line
- 518: supply voltage node of RFID tag circuits
- 520: supply buffer capacitance
- 522: supply buffer capacitance
- 600: method of implementing a voltage limiter
- 602: providing a voltage limiter with a first voltage line coupled to an output of a charge pump of the RFID tag, wherein the voltage limiter is configured to receive an output voltage of the charge pump on said first voltage line
- 604: providing the voltage limiter with a first shunting element comprising an input and an output, wherein the output of the first shunting element is coupled to ground
- 606: providing the voltage limiter with a second shunting element comprising an input and an output, wherein the input of the second shunting element is coupled to the first voltage line and the output of the second shunting element is coupled to the input of the first shunting element
- 608: providing the voltage limiter with a series regulating element comprising a first input, a second input and an output, wherein the first input of the series regulating element is coupled to the first voltage line and the output of the series regulating element is coupled to a supply voltage node of one or more circuits of the RFID tag
- 610: providing the voltage limiter with a second voltage line coupled to the output of the second shunting element and to the second input of the series regulating element
- 700: voltage limitation realization in an RFID front-end
- 702: RF charge pump
- 704: voltage limiter
- 706: shunt regulator
- 708: diode
- 710: series regulating transistor
- 712: bias current
- 714: first voltage line
- 716: second voltage line
- 718: supply voltage node of RFID tag circuits
- 720: supply buffer capacitance
- 722: supply buffer capacitance
- 800: voltages within voltage limiter versus RF charge pump output current
- 802: voltage on the first voltage line (*vcp*)
- 804: voltage on the supply voltage node (*vdd*)
- 806: voltage on the second voltage line (*vsh*)

## Claims

1. A voltage limiter for use in a radio frequency identification, RFID, tag, the voltage limiter comprising:
a first voltage line coupled to an output of a rectifier of the RFID tag, wherein the voltage limiter is configured to receive an output voltage of the rectifier on said first voltage line;
a first shunting element comprising an input and an output, wherein the output of the first shunting element is coupled to ground;
a second shunting element comprising an input and an output, wherein the input of the second shunting element is coupled to the first voltage line and the output of the second shunting element is coupled to the input of the first shunting element;
a series regulating element comprising a first input, a second input and an output, wherein the first input of the series regulating element is coupled to the first voltage line and the output of the series regulating element is coupled to a supply voltage node of one or more circuits of the RFID tag; and
a second voltage line coupled to the output of the second shunting element and to the second input of the series regulating element.

2. The voltage limiter of claim 1, further comprising a biasing element coupled between the first voltage line and the second voltage line, wherein said biasing element is configured to provide a bias current to the second voltage line.

3. The voltage limiter of claim 2, wherein the biasing element is implemented as a current mirror, current source, or as a resistor.

4. The voltage limiter of claim 2 or 3, wherein the second shunting element, the series regulating element and/or the biasing element are configured to be bypassed when the RFID tag operates in a predefined mode.

5. The voltage limiter of any one of claims 2 to 4, wherein the bias current is designed to be larger than an intrinsic bias current of the first shunting element.

6. The voltage limiter of any preceding claim, wherein the first shunting element and the second shunting element are implemented as diodes.

7. The voltage limiter of any preceding claim, wherein the second shunting element is implemented as a p-n junction diode or as a metal-oxide-semiconductor, MOS, transistor configured as a diode.

8. The voltage limiter of any preceding claim, wherein the series regulating element is implemented as an N-channel metal-oxide-semiconductor, NMOS, transistor.

9. The voltage limiter of any preceding claim, further comprising one or more supply buffer capacitances coupled to the first voltage line, the second voltage line and/or the supply voltage node.

10. An RFID tag comprising the voltage limiter of any preceding claim.

11. A method of implementing a voltage limiter for use in a radio frequency identification, RFID, tag, the method comprising:
providing the voltage limiter with a first voltage line coupled to an output of a rectifier of the RFID tag, wherein the voltage limiter is configured to receive an output voltage of the rectifier on said first voltage line;
providing the voltage limiter with a first shunting element comprising an input and an output, wherein the output of the first shunting element is coupled to ground;
providing the voltage limiter with a second shunting element comprising an input and an output, wherein the input of the second shunting element is coupled to the first voltage line and the output of the second shunting element is coupled to the input of the first shunting element;
providing the voltage limiter with a series regulating element comprising a first input, a second input and an output, wherein the first input of the series regulating element is coupled to the first voltage line and the output of the series regulating element is coupled to a supply voltage node of one or more circuits of the RFID tag; and
providing the voltage limiter with a second voltage line coupled to the output of the second shunting element and to the second input of the series regulating element.

12. The method of claim 11, further comprising providing the voltage limiter with a biasing element coupled between the first voltage line and the second voltage line, wherein said biasing element is configured to provide a bias current to the second voltage line.

13. The method of claim 12, further comprising implementing the biasing element as a current mirror, current source, or as a resistor.

14. The method of claim 12 or 13, wherein the second shunting element, the series regulating element and/or the biasing element are configured to be bypassed when the RFID tag operates in a predefined mode.

15. The method of any one of claims 11 to 14, further comprising implementing the first shunting element and the second shunting element as diodes.

## Amended claims

### Amended claims in accordance with Rule 137(2) EPC.

1. A voltage limiter (504) for use in a radio frequency identification, RFID, tag, the voltage limiter comprising:
a first voltage line (514) coupled to an output of a rectifier (502) of the RFID tag, wherein the voltage limiter (504) is configured to receive an output voltage of the rectifier (502) on said first voltage line (514);
a first shunting element (506) comprising an input and an output, wherein the output of the first shunting element (506) is coupled to ground;
a second shunting element (508) comprising an input and an output, wherein the input of the second shunting element (508) is coupled to the first voltage line (514) and the output of the second shunting element (508) is coupled to the input of the first shunting element (506);
a series regulating element (510) comprising a first input, a second input and an output, wherein the first input of the series regulating element (510) is coupled to the first voltage line (514) and the output of the series regulating element (510) is coupled to a supply voltage node (518) of one or more circuits of the RFID tag; and
a second voltage line (516) coupled to the output of the second shunting element (508) and to the second input of the series regulating element (510).

2. The voltage limiter (504) of claim 1, further comprising a biasing element (512) coupled between the first voltage line (514) and the second voltage line (516), wherein said biasing element (512) is configured to provide a bias current to the second voltage line (516).

3. The voltage limiter (504) of claim 2, wherein the biasing element (512) is implemented as a current mirror, current source, or as a resistor.

4. The voltage limiter (504) of claim 2 or 3, wherein the second shunting element (508), the series regulating element (510) and/or the biasing element (512) are configured to be bypassed when the RFID tag operates in a predefined mode.

5. The voltage limiter (504) of any one of claims 2 to 4, wherein the bias current is designed to be larger than an intrinsic bias current of the first shunting element (506).

6. The voltage limiter (504) of any preceding claim, wherein the first shunting element (506) and the second shunting element (508) are implemented as diodes.

7. The voltage limiter (504) of any preceding claim, wherein the second shunting element (508) is implemented as a p-n junction diode or as a metal-oxide-semiconductor, MOS, transistor configured as a diode.

8. The voltage limiter (504) of any preceding claim, wherein the series regulating element (510) is implemented as an N-channel metal-oxide-semiconductor, NMOS, transistor.

9. The voltage limiter (504) of any preceding claim, further comprising one or more supply buffer capacitances (520, 522) coupled to the first voltage line (514), the second voltage line (516) and/or the supply voltage node (518).

10. An RFID tag comprising the voltage limiter (504) of any preceding claim.

11. A method (600) of implementing a voltage limiter for use in a radio frequency identification, RFID, tag, the method comprising:
providing (602) the voltage limiter with a first voltage line coupled to an output of a rectifier of the RFID tag, wherein the voltage limiter is configured to receive an output voltage of the rectifier on said first voltage line;
providing (604) the voltage limiter with a first shunting element comprising an input and an output, wherein the output of the first shunting element is coupled to ground;
providing (606) the voltage limiter with a second shunting element comprising an input and an output, wherein the input of the second shunting element is coupled to the first voltage line and the output of the second shunting element is coupled to the input of the first shunting element;
providing (608) the voltage limiter with a series regulating element comprising a first input, a second input and an output, wherein the first input of the series regulating element is coupled to the first voltage line and the output of the series regulating element is coupled to a supply voltage node of one or more circuits of the RFID tag; and
providing (610) the voltage limiter with a second voltage line coupled to the output of the second shunting element and to the second input of the series regulating element.

12. The method (600) of claim 11, further comprising providing the voltage limiter with a biasing element coupled between the first voltage line and the second voltage line, wherein said biasing element is configured to provide a bias current to the second voltage line.

13. The method (600) of claim 12, further comprising implementing the biasing element as a current mirror, current source, or as a resistor.

14. The method (600) of claim 12 or 13, wherein the second shunting element, the series regulating element and/or the biasing element are configured to be bypassed when the RFID tag operates in a predefined mode.

15. The method (600) of any one of claims 11 to 14, further comprising implementing the first shunting element and the second shunting element as diodes.
